# EUROPÄISCHE PATENTSCHRIFT

(11) **EP 2 508 296 B1**
(45) Veröffentlichungstag und Bekanntmachung des Hinweises auf die Patenterteilung: **31.12.2014**
(21) Anmeldenummer: 12002213.2
(22) Anmeldetag: 27.03.2012
(51) Int. Cl.: B23Q 1/60, B23Q 3/155, B23Q 3/157, B23Q 5/40, B25J 18/02

(54) **Werkzeug-Handhabungseinrichtung für Werkzeugmaschinen**
Tool handling device for machine tools
Dispositif de manipulation d'outil pour machines-outils

(30) Priorität: 05.04.2011 DE 102011006811
(43) Veröffentlichungstag der Anmeldung: 10.10.2012
(73) Patentinhaber: DECKEL MAHO Pfronten GmbH, 87459 Pfronten (DE)
(72) Erfinder: Mayr, Matthias, 87629 Füssen (DE); Trenkle, Michael, 87459 Pfronten (DE); Gronbach, Hans, 87637 Eisenberg (DE)
(74) Vertreter: Beetz & Partner

(56) Entgegenhaltungen:
- EP-A1- 1 754 565
- EP-A1- 2 191 933
- DE-A1- 19 913 615
- DE-U1- 8 624 943
- JP-A- S6 279 934

## Beschreibung

Die Erfindung betrifft eine Werkzeug-Handhabungseinrichtung für Werkzeugmaschinen der im Oberbegriff des Patentanspruchs 1 angegebenen Gattung.

Aus der EP 1 754 565 A1 ist eine derartige Werkzeug-Handhabungseinrichtung für ein CNC-gesteuertes Bearbeitungszentrum bekannt, die eine an dem Maschinengestell befestigbare Basis aufweist, an welcher ein Antriebsmotor zur Betätigung des Werkzeugwechslers befestigt ist. Alle Bewegungen des einen Doppelgreifer aufweisenden Werkzeugwechslers werden von diesem Antriebsmotor ausgelöst, der als Servomotor oder Schrittmotor ausgeführt ist. An der stationären und maschinenfesten Basis ist in einer ersten Linearführung ein Unterschlitten in X-Koordinatenrichtung verfahrbar angeordnet. Dieser Unterschlitten trägt eine zweite Linearführung, die sich parallel zur ersten Linearführung erstreckt und einen Oberschlitten aufweist, an dem der Träger des Doppelzangengreifers befestigt ist. Durch die teleskopische Anordnung der ersten und zweiten Linearführung wird die Reichweite für die horizontalen Fahrbewegungen des Werkzeugwechslers wesentlich vergrößert. Aufgrund der Anordnung des gemeinsamen Antriebsmotors an der maschinenfesten Basis ist die Übertragung der Antriebsenergie, insbesondere auf die zweite Linearführung und auf den Werkzeugwechsler kompliziert, wodurch sich eine gegen Störungen anfällige Gesamtkonstruktion ergibt.

Aus der DE 10 2008 059 422 ist eine Werkzeug-Handhabungseinrichtung für Werkzeugmaschinen bekannt, die einen Werkzeugwechsler mit einem verdrehbaren Werkzeug-Doppelgreifer aufweist, der am Ende einer heb- und senkbaren sowie um eine Längsachse verdrehbaren Tragsäule montiert ist. Zum Erzeugen der Hub- und Drehbewegungen des Werkzeug-Doppelgreifers dient ein mechanisches Kurvengetriebe, das einen einzigen Antriebsmotor, eine Kurventrommel und ein Zwischengetriebe aufweist. Auf der oberen Stirnseite der Kurventrommel ist ein Mitnehmer für den Drehantrieb des Werkzeug-Doppelgreifers befestigt. Für die Hubbewegung des Werkzeug-Doppelgreifers ist an der Umfangswandung der Kurventrommel eine Hubkurve ausgearbeitet. Die Tragsäule des Werkzeug-Doppelgreifers, die Kurventrommel und das Zwischengetriebe sind in einem gehäuseartigen Schlitten untergebracht, der mittels eines Motor-Spindeltriebes auf einer Basis verfahrbar ist. Da die Achsen der Kurventrommel, des Malteserrades, des Zwischengetriebes und auch der Tragsäule parallel hintereinander angeordnet sind, hat der Schlitten eine geringe Breite, sodass er nur einen entsprechend geringen Platz beansprucht. Allerdings ist diese bekannte Handhabungseinrichtung beispielsweise durch das notwendige Zwischengetriebe mit Malteserkreuzantrieb und den vertikalen sowie rotierenden Bewegungsablauf des Doppelgreifers technisch aufwendig, wobei ihr maximal möglicher Verfahrweg begrenzt ist.

Aufgabe der Erfindung ist es, eine Werkzeug-Handhabungseinrichtung für Werkzeugmaschinen zu schaffen, die technisch einfach konzipiert ist und neben einem geringen Platzbedarf ausreichend lange Verfahrwege für den Werkzeugwechsler ermöglicht.

Diese Aufgabe wird erfindungsgemäß durch die Merkmale des Anspruchs 1 gelöst, wodurch eine teleskopartige Gesamtbewegung des Werkzeugwechslers zwischen der Übergabeposition am Werkzeugmagazin und der Einwechselposition an der Arbeitsspindel erzielt wird.

Ein besonderer Vorteil der Erfindung liegt darin, dass ein im Stand der Technik in der Regel verwendetes zusätzliches Handhabungsgerät, das die einzelnen Werkzeuge aus dem Magazin entnimmt und sie in einen entsprechend positionierten Werkzeugwechsler übergibt, nicht notwendig ist, sodass sich die Betriebsabläufe beschleunigen und sich die Technologie vereinfacht. Durch die gleichachsige Ausrichtung und die vorzugsweise synchrone Bewegbarkeit der beiden Schlitten wird ein langer Fahrweg für den Werkzeugwechsler erreicht, sodass größere Zwischenabstände zwischen dem Magazin und der Einwechselposition der Arbeitsspindel ohne die Notwendigkeit eines zusätzlichen Übergabegerätes überbrückt werden können. Dies gilt insbesondere für den Fall, dass der maximal mögliche Fahrweg des unteren Schlittens kürzer als die notwendige Übergabestrecke ist. Der maximal mögliche Fahrweg wird durch den zusätzlichen Weg des oberen Schlittens in ausreichendem Maß verlängert.

Gemäß der Erfindung sind die beiden Lineartriebe für die Fahrbewegungen der beiden Schlitten Spindeltriebe, die über zwei Riementriebe mit dem einzigen, zwischen beiden Spindeltrieben angeordneten Antriebsmotor gekoppelt sind.

Vorteilhaft sind die Gewindespindeln der beiden Spindeltriebe zueinander parallel und in unterschiedlichen Höhenlagen in der Tragkonstruktion angeordnet, was eine besonders schmale Bauform und eine technisch einfache Antriebsart ergibt. Dabei ist zweckmäßigerweise die eine Gewindespindel über ihre Spindelmutter und die andere Gewindespindel über die Spindel selbst mit dem Antriebsmotor gekoppelt und zwar zweckmäßig über Endlos-Keil- oder -Zahnriemen. Eine günstige Anordnung für die beiden Riementriebe bei geringen Platzansprüchen ergibt sich, wenn der Antriebsmotor in der Tragkonstruktion in einer mittleren Höhenlage zwischen den beiden Gewindespindeln angeordnet wird.

Gemäß einem weiteren bevorzugten Ausführungsbeispiel der Erfindung ist der von dem unteren Spindeltrieb angetriebene untere Schlitten über zwei Führungsschienen auf einer quer beweglichen Basis abgestützt. Auf diesem unteren Schlitten sind zwei in seiner Längsrichtung ausgerichtete Führungsschienen montiert, auf denen der obere Schlitten mittels des oberen Spindeltriebs zusammen mit dem Werkzeugwechsler verfahrbar ist.

Im Folgenden wird ein Ausführungsbeispiel der Erfindung anhand der Zeichnung im Einzelnen beschrieben. Es zeigen:
- Fig. 1: eine schematische Vorderansicht einer Werkzeugmaschine mit Schwenk-Fräskopf und mit einer Ausführung der erfindungsgemäßen Werkzeug-Handhabungseinrichtung,
- Fig. 2: die Werkzeug-Handhabungseinrichtung in schematischer perspektivischer Darstellung,
- Fig. 3: schematische Ansichten der Werkzeug-Handhabungseinrichtung in der linken Endlage (a), in einer Zwischenstellung (b) und in der rechten Endlage (c).

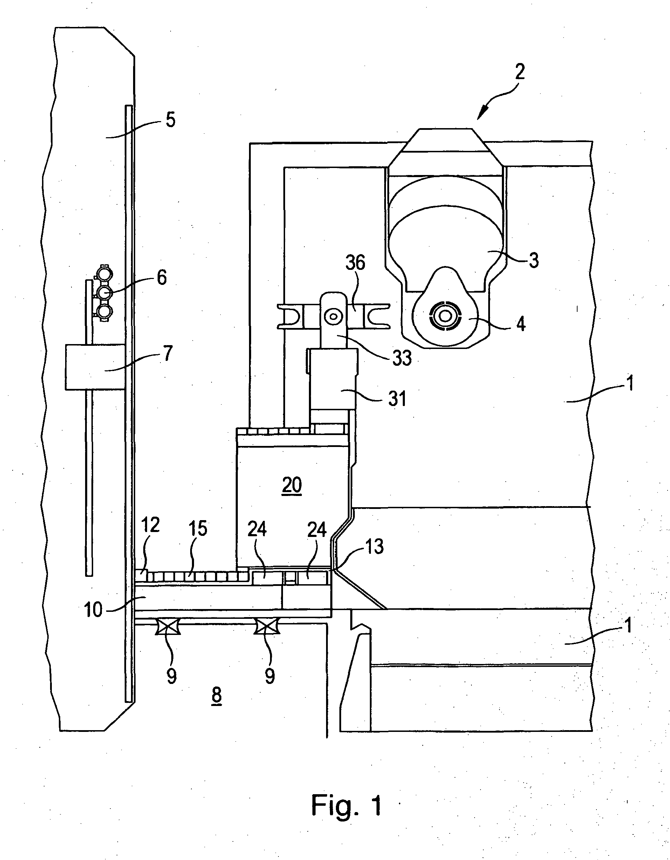

In Fig. 1 ist schematisch eine NC-gesteuerte Fräsmaschine dargestellt, die ein Maschinengestell 1 und eine in mehreren Koordinatenachsen verfahrbare Bearbeitungseinheit 2 enthält. Diese Bearbeitungseinheit 2 weist bei dem dargestellten Ausführungsbeispiel einen relativ schweren Schwenk-Drehkopf 3 auf, in dem eine verschwenkbare Arbeitsspindel 4 mit eingebautem Antriebsmotor gelagert ist. In der gezeigten Stellung ist die Arbeitsspindel 4 horizontal ausgerichtet. Seitlich neben der Fräsmaschine ist ein Werkzeugmagazin 5 vorgesehen, das hier als vertikales Kettenmagazin mit Werkzeugaufnahmen 6 und einer Übergabeposition 7 für die vereinzelten Werkzeuge ausgebildet ist.

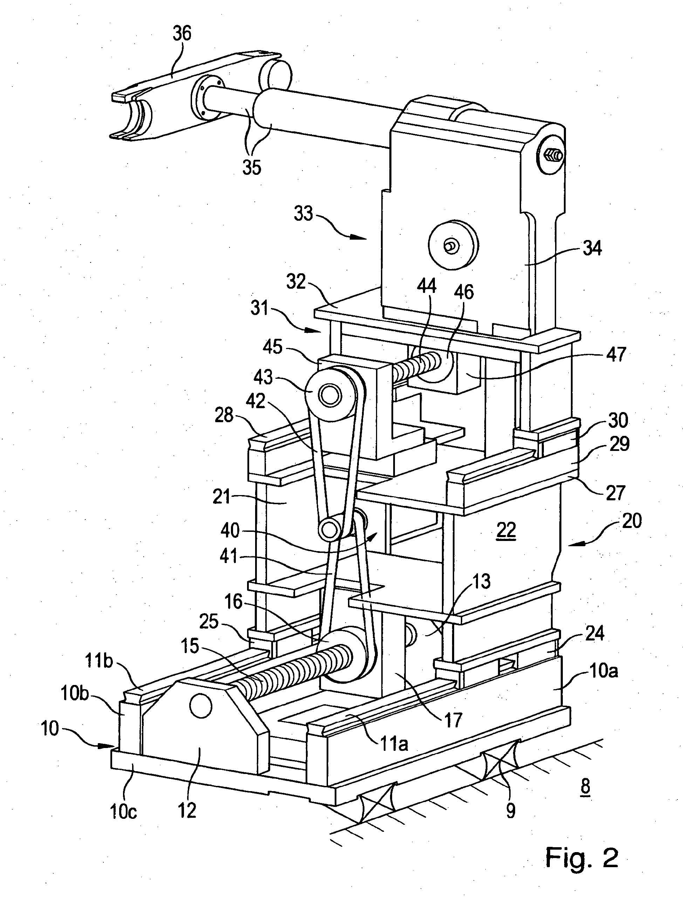

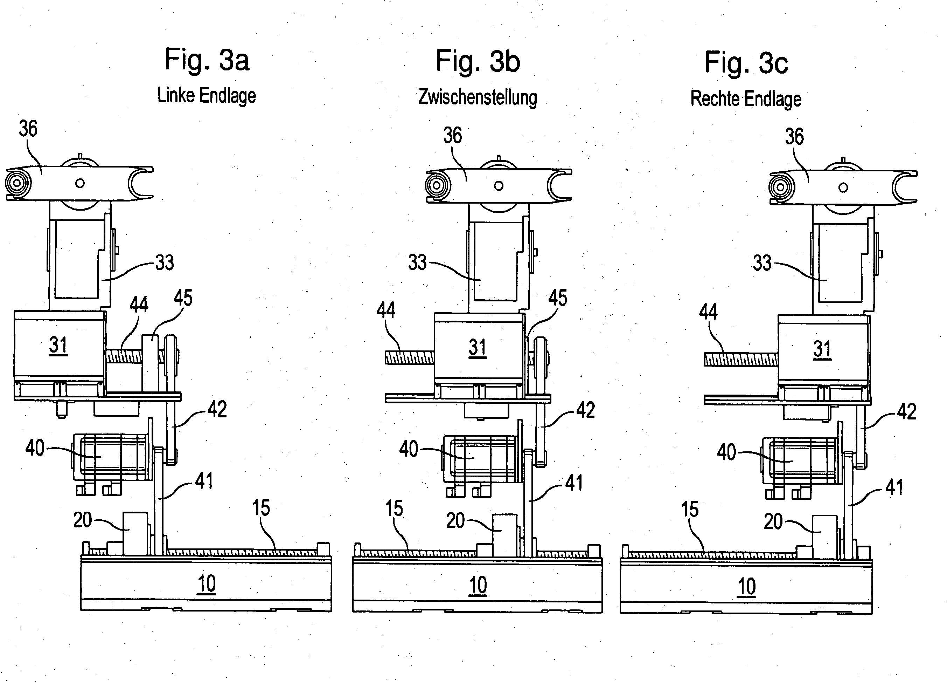

Auf einem Unterbau 8 ist in Führungsschienen 9 eine Basis 10 in einer zur Zeichenebene der Fig. 1 senkrechten Richtung verfahrbar. Wie aus Fig. 2 ersichtlich, besitzt diese Basis 10 zwei parallele Seitenwände 10a, 10b und eine durchgehende Bodenplatte 10c. Auf der Oberseite der beiden Seitenwände 10a, 10b sind Führungsschienen 11 a, 11b befestigt. Am jeweils vorderen und hinteren Ende der Bodenplatte 10c sind je ein Lagerbock 12, 13 fest montiert, in denen je eine Lageranordnung für eine horizontale und parallel zu den beiden Führungsschienen 11a, 11b ausgerichtete Gewindespindel 15 angeordnet ist. Auf der Gewindespindel 15 ist eine Spindelmutter 16 gelagert, die über einen Flansch mit einer vertikalen - hier viereckigen - Tragplatte 17 fest verbunden ist. Durch eine Drehbewegung der in Längsrichtung stationären Gewindespindel 15 wird die Spindelmutter 16 und damit die Tragplatte 17 in Spindellängsrichtung verfahren. In Fig. 1 und 2 befinden sich die Spindelmutter 16 und die Tragplatte 17 in ihrer hinteren Endlage - entsprechend Fig. 3c - in welcher ein Werkzeug in die Arbeitsspindel 4 eingewechselt wird.

Die Tragplatte 17 ist mit einer stabilen Plattenkonstruktion 20 fest verbunden, die aus einer Vielzahl von formsteifen vertikalen und horizontalen Platten zusammengebaut ist. Die beiden Seitenwände 21, 22 dieser Plattenkonstruktion 20 sind über Schuhe 24, 25 auf den beiden Führungsschienen 11a, 11b der Basis 10 verfahrbar abgestützt. Auf einer oberen Tragplatte 27 sind zwei zueinander parallele Holme mit Führungsschienen 28, 29 montiert, auf denen Führungsschuhe 30 gleitend abgestützt sind. Die beiden Führungsschienen 28, 29 sind in gleicher Richtung wie die beiden unteren Führungsschienen 11a, 11b ausgerichtet. Auf den beiden Führungsschienen 28, 29 ist über die Führungsschuhe 30 ein Oberschlitten 31 in Schienenlängsrichtung gleitend abgestützt, der ebenfalls als Tragplattenkonstruktion ausgeführt ist und auf seiner obersten Platte 32 einen Werkzeugwechsler 33 trägt.

Dieser Werkzeugwechsler 33 besitzt ein schmales Gehäuse 34, in dessen Oberteil ein Teleskoprohr 35 gelagert und um die Längsachse motorisch verdrehbar ist. Am freien Ende dieses Teleskoprohrs 35 befindet sich ein Doppelgreifer 36.

Bei dem vorstehend beschriebenen Ausführungsbeispiel bildet die untere Plattenkonstruktion 20 einen Unterschlitten und die obere Plattenkonstruktion 31 einen Oberschlitten. Die beiden Schlitten 20 und 31 führen gemeinsame synchrone Fahrbewegungen aus, wie dies im Folgenden anhand der Figuren 3a bis 3c ausführlicher erörtert wird. Als gemeinsame Antriebseinheit für den Unterschlitten 20 und den Oberschlitten 31 dient ein E-Motor 40, der über eine gemeinsame Antriebswelle zwei Endlos-Treibriemen 41, 42 antreibt. Der obere Treibriemen 42 treibt über eine Scheibe 43 eine obere Gewindespindel 44, deren vorderes Ende in einem Bock 45 gelagert ist. Die Gewindemutter 46 dieses Spindeltriebes ist mit einer massiven Tragplatte 47 fest verbunden, die an der den Oberschlitten bildenden Plattenkonstruktion 31 befestigt ist.

Die Basis 10, der Unterschlitten 20 und der Oberschlitten 31 bilden eine Tragkonstruktion für den Werkzeuggreifer 36. Die obere Gewindespindel 44 wird vom Motor 40 über den Zahn- bzw. Treibriemen 42 und die auf der Spindel befestigte Scheibe 43 angetrieben. Da auf dieser oberen Gewindespindel 44 die Spindelmutter 46 drehbar gelagert ist, wird die Spindelmutter 46 zusammen mit dem Oberschlitten 31 bei einer Rotation der Gewindespindel 44 in Spindellängsrichtung verfahren.

Der untere Spindeltrieb 15, 16 wird vom gemeinsamen Motor 40 über den Endlos-Treibriemen 41 an der Mutter 16 angetrieben. Der gemeinsame Antrieb der beiden gleichgerichteten Gewindespindeln 15 und 44 durch nur einen Motor 40 führt zur Einsparung eines weiteren Antriebsmotors, zu einer kompakten Bauweise durch Wegfall eines zweiten Antriebsaggregates und zu einer geringen Breite der Handhabungseinrichtung, was bei den beengten Platzverhältnissen von komplexen Bearbeitungszentren von besonderer Bedeutung ist.

Die Fig. 3a bis 3c zeigen drei Zustände im Bewegungsablauf der erfindungsgemäßen Handhabungsvorrichtung bei der Übergabe eines Werkzeugs vom Werkzeugmagazin zur Arbeitsspindel durch den Werkzeuggreifer 36. In der linken Endlage der Fig. 3a wird ein Werkzeug dem Magazin entnommen und in der rechten Endlage der Fig. 3c wird dieses Werkzeug - nach einer halben Drehung des Werkzeuggreifers 36 - in die Arbeitsspindel 4 des Maschinen-Schwenk- und -Drehkopfes eingesetzt. Die Gesamtbewegung des Werkzeuggreifers 36 setzt sich - wie in Fig. 3a bis 3c gezeigt - aus einer Linearbewegung des Unterschlittens 20 mit dem darin montierten Motor 40 und aus einer gleichgerichteten Linearbewegung des Oberschlittens 31 mit dem darauf montierten Werkzeugwechsler 33 zusammen. Wie aus den drei Darstellungen der Figuren 3a bis 3c entnehmbar, vollzieht sich bei diesem Ausführungsbeispiel die Gesamtbewegung des Werkzeugwechslers 33 in einem durchgehenden Bewegungszug, und zwar durch die synchron ablaufenden Einzelbewegungen der beiden Schlitten 20 und 31.

Aufgrund der großen Masse der Bearbeitungseinheit 3, 4 dieser Werkzeugmaschine sind schnelle Fahrbewegungen zum Zwecke der Werkzeugwechsel über längere Strecken nur begrenzt möglich. Daher ist es günstiger, die notwendigen Fahrbewegungen vom Werkzeugwechsler ausführen zu lassen, da wesentlich geringere Massen bewegt werden müssen. Bei der erfindungsgemäßen Handhabungseinrichtung ist die aus den Einzelbewegungen des Unterschlittens und des Oberschlittens zusammengesetzte Bewegung erforderlich, weil im unteren Bereich der Werkzeugmaschine nur eine begrenzte Strecke für eine freie Längsbewegung des Unterschlittens vorhanden ist. Dies geht z.B. aus Fig. 1 hervor, in welcher der in seiner rechten Endlage befindliche Unterschlitten 20 an einem linken Seitenteil des Maschinengestells 1 anliegt und aus diesem Grunde nicht weiter nach rechts bewegt werden kann. In Fig. 1 befindet sich auch der Oberschlitten 31 mit dem Werkzeugwechsler 33 in seiner rechten Endlage gemäß Fig. 3c. Für einen Werkzeugwechsel ist es erforderlich, dass die Bearbeitungseinheit 3 eine relativ kurze Strecke in Fig. 1 nach links verfährt, sodass ein Eingriff des Werkzeuges vom Werkzeuggreifer 36 in die Arbeitsspindel 4 erfolgen kann. Da der Oberschlitten 31 in der gleichen Richtung wie der Unterschlitten verfahren wird, ergibt sich eine zusätzliche Fahrstrecke im oberen Bereich der Maschine, die für ein problemloses Erreichen der Einwechselposition des Werkzeuggreifers bzw. der Arbeitsspindel ausreicht. Die synchrone und gleichsinnige Verfahrbewegung der beiden Schlitten 20, 31 ermöglicht einen schnellen Werkzeugwechsel.

## Patentansprüche

1. Werkzeug-Handhabungseinrichtung für Werkzeugmaschinen mit
- einem Werkzeugmagazin (5), das eine Übergabeposition (7) für die Werkzeuge aufweist,
- einem zwischen der Übergabeposition und einer Einwechselposition bewegbaren Werkzeugwechsler (33), der einen verdrehbaren Doppelgreifer (36) aufweist und
- einer auf einer Basis (10) verfahrbaren Tragkonstruktion (20, 31), auf welcher der Werkzeugwechsler (33) montiert ist,
- wobei die Tragkonstruktion zwei übereinander angeordnete und gleichsinnig verfahrbare Schlitten (20, 31) aufweist,
- wobei auf jedem der beiden Schlitten (20, 31) je ein Lineartrieb (15, 16; 44, 45) montiert ist und die beiden Lineartriebe (15, 16; 44, 45) von einem gemeinsamen Antriebsmotor (40) angetrieben sind,
**dadurch gekennzeichnet, dass**
- die beiden Lineartriebe (15, 16; 44, 45) jeweils aus einer Gewindespindel (15; 44) und aus einer Spindelmutter (16; 45) bestehen,
- wobei die Spindelmutter (16) der unteren Gewindespindel (15) über einen unteren endlosen Riementrieb (41) und die obere Gewindespindel (44) über einen oberen endlosen Riementrieb (42) mit der Ausgangswelle des gemeinsamen Antriebsmotors (40) gekoppelt sind.

2. Werkzeug-Handhabungseinrichtung nach Anspruch 1,
**dadurch gekennzeichnet, dass**
der Antriebsmotor (40) in der Tragkonstruktion (20, 31) in einer mittleren Höhenlage zwischen den beiden Gewindespindeln (15; 44) angeordnet ist.

3. Werkzeug-Handhabungseinrichtung nach Anspruch 2,
**dadurch gekennzeichnet, dass**
der Antriebsmotor (40) in einem Innenraum des als Plattenkonstruktion ausgeführten Unterschlittens (20) fest montiert ist.

4. Werkzeug-Handhabungseinrichtung nach einem der vorstehenden Ansprüche,
**dadurch gekennzeichnet, dass**
die Tragkonstruktion einen vom unteren Gewindetrieb (15, 16) angetriebenen und auf zwei Führungsschienen (11a, 11b) einer Basis (10) verfahrbaren Unterschlitten (20) und einen auf dem Unterschlitten (20) auf zwei weiteren Führungsschienen (28) verfahrbaren Oberschlitten (31) aufweist, auf dem der Werkzeugwechsler (33) mit dem verdrehbaren Doppelgreifer (36) montiert ist, wobei im Unterschlitten (20) der gemeinsame Antriebsmotor (40) und in jedem Schlitten (20, 31) je ein vom gemeinsamen Antriebsmotor (40) angetriebener Spindeltrieb (15, 16; 44, 45) vorgesehen sind.

5. Werkzeug-Handhabungseinrichtung nach einem der vorstehenden Ansprüche,
**dadurch gekennzeichnet, dass**
ein Teleskop-Tragrohr (35) des in einem schmalen Gehäuse (34) drehbar gelagerten Werkzeugwechslers (33) senkrecht zur Ausrichtung der Spindeltriebe (15, 16; 44, 45) angeordnet ist.

## Claims

1. A tool handling device for machine tools, comprising
- a tool magazine (5) which includes a transfer position (7) for the tools,
- a tool changer (33) which is movable between the transfer position and an exchange position and which has a twistable double gripper (36) and
- a support structure (20, 31) which is movable along a base (10) and on which the tool changer (33) is mounted,
- wherein the support structure has two slides (20, 31) which ore arranged on top of each other and are movable in the same direction,
- wherein a drive (15, 16; 44, 45) is mounted on each of the two slides (20, 31) and the two linear drives (15, 16; 44, 45) are driven by a common drive motor (40),
**characterized in that**
- each of the two linear drives (15, 16; 44, 45) consists of a threaded spindle (15; 44) and of a spindle nut (16; 45),
- wherein the spindle nut (16) of the lower threaded spindle (15) is coupled to the output shaft of the common drive motor (40) via a lower endless belt drive (41) and the upper threaded spindle (44) is coupled thereto via an upper endless belt drive (42).

2. The tool handling device according to claim 1,
**characterized in that**
the drive motor (40) is arranged in the support structure (20, 31) at a middle height position between the two threaded spindles (15; 44).

3. The tool handling device according to claim 2,
**characterized in that**
the drive motor (40) is firmly mounted in on interior of the lower slide (20) designed as a plate structure.

4. The tool handling device according to any of the preceding claims, **characterized in that**
the support structure has a lower slide (20) which is driven by the lower screw drive (15, 16) and which is movable on two guide rails (11a, 11b) of a base (10) and an upper slide (31) which is movable on the lower slide (20) on two further guide rails (28), the tool changer (33) with the twistable double gripper (36) being mounted on the upper slide, wherein the common drive motor (04) is provided in the lower slide (20) and each slide (20, 31) accommodates a spindle drive (15, 16; 44, 45) driven by the common drive motor (40).

5. The tool handling device according to any of the preceding claims, **characterized in that**
a telescopic support tube (35) of the tool changer (33) rotatably mounted in a narrow housing (34) is arranged perpendicularly to the orientation of the spindle drives (15, 16; 44, 45).

## Revendications

1. Dispositif de manipulation d'outil pour machines-outils comprenant
- un magasin d'outils (5) présentant une position de transfert pour les outils,
- un changeur d'outil (33) pouvant être déplacé entre la position de transfert et une position de mise en place, équipé d'une pince double rotative (36),
- une structure support (20, 31) déplaçable sur une base (10), sur laquelle est montée le changeur d'outils (33),
- la structure support présentant deux chariots (20, 31) disposés l'un sur l'autre et déplaçables dans le même sens,
- chacun des chariots (20, 31) étant équipé d'un entraînement linéaire (15,16 ; 44, 45), les deux entraînement linéaires (15,16 ; 44, 45) étant entraînés par un moteur d'entraînement commun (40),
**caractérisé en ce que**
- les deux actionneurs linéaires (15, 16 ; 44, 45) sont chacun constitués d'une broche filetée (15 ; 44) et d'un écrou de broche (16 ; 45),
- l'écrou de broche (16) de la broche filetée inférieure (15) étant couplé par un entraînement à courroie sans fin inférieur (41), et la broche filetée supérieure (44) par un entraînement à courroie sans fin supérieur (42), à un arbre de sortie du moteur d'entraînement commun (40).

2. Dispositif de manipulation d'outil selon la revendication 1, **caractérisé en ce que**
le moteur d'entraînement (40) est disposé dans la structure support (20, 31) à mi-hauteur entre les deux broches filetées (15 ; 44).

3. Dispositif de manipulation d'outil selon la revendication 2, **caractérisé en ce que**
le moteur d'entraînement (40) est monté de manière fixe à l'intérieur du chariot inférieur (20) servant de structure porteuse.

4. Dispositif de manipulation d'outil selon l'une quelconque des revendications précédentes,
**caractérisé en ce que**
la structure support présente un chariot inférieur (20) entraîné par l'entraînement fileté inférieur (15, 16) et déplaçable sur deux rails de guidage (11a, 11b) d'une base (10), et un chariot supérieur (31) se trouvant sur le chariot inférieur (20) déplaçable sur deux autres rails de guidage (28) sur lequel est monté le changeur d'outils (33) à pince double rotative (36), le chariot inférieur (20) intégrant le moteur d'entraînement commun (40) et chaque chariot (20, 31) intégrant un entraînement à broche (15, 16 ; 44, 45) entrainé par le moteur d'entrainement commun (40).

5. Dispositif de manipulation d'outil selon l'une quelconque des revendications précédentes,
**caractérisé en ce qu'**
un tube support télescopique (35) du chargeur d'outils (33) monté en rotation dans un boîtier étroit (34) est disposé horizontalement par rapport à l'orientation des entraînements à broche (15, 16 ; 44, 45).
